# EUROPEAN PATENT SPECIFICATION

(11) **EP 4 495 957 B1**
(45) Date of publication and mention of the grant of the patent: **24.06.2026**
(21) Application number: 23769764.4
(22) Date of filing: 14.03.2023
(51) Int. Cl.: H01B 7/29, H01B 7/02, H01B 7/18

(54) **ELECTRIC ENERGY TRANSMISSION SYSTEM AND AUTOMOBILE**
ELEKTRISCHES ENERGIEÜBERTRAGUNGSSYSTEM UND KRAFTFAHRZEUG
SYSTÈME DE TRANSMISSION D'ÉNERGIE ÉLECTRIQUE ET AUTOMOBILE

(30) Priority: 14.03.2022 CN 202210248435
(43) Date of publication of application: 22.01.2025
(73) Proprietor: Jilin Zhong Ying High Technology Co., Ltd., Jilin 130028 (CN)
(72) Inventor: WANG, Chao, Changchun, Jilin 130028 (CN)
(74) Representative: Boult Wade Tennant LLP
(86) International application number: PCT/CN2023/081326
(87) International publication number: WO 2023/174262

(56) References cited:
- EP-A2- 2 571 119
- CN-A- 1 774 835
- CN-A- 114 758 834
- CN-U- 214 203 298
- CN-U- 214 312 693
- CN-U- 217 822 167
- DE-U1- 9 011 268
- JP-A- 2019 149 242
- US-A- 4 192 352
- US-A1- 2015 310 961
- US-A1- 2021 134 483

## Description

The present disclosure claims priority to Chinese Patent Application NO. CN202210248435.2, filed on March 14, 2022, and entitled "Electric Energy Transmission System and Automobile".

### TECHNICAL FIELD

The present disclosure relates to the technical field of electric energy transmission, and particular to an electric energy transmission system and an automobile.

### BACKGROUND

As electric appliances on the automobile increase, more and more high-power cables are used on the automobile. Most of the existing high-power cables are multi-core flexible cables. Although the multi-core cables are flexible and can be conveniently processed and wired, due to the large cable diameters and the large weight, so in a traveling process of the automobile, the cables frequently rub against an automobile shell, resulting in damage of insulating layers of the cables, which causes high-voltage discharge or short-circuit, damaging the automobile in minor cases, and causing serious traffic accidents in serious cases. Thus, solid cables become one of main choices for replacing the flexible cables.

However, the layout environment inside the automobile body is complex, the cables need to be bent and formed at many positions, and the resistance of the solid cables at the bent positions changes, resulting in greater heating at the bent positions than other positions, which causes softening and even melting of part of the insulating layers and causes high-voltage discharge or short-circuit. Besides, the excessively high heat also affects the arrangement environment of the bent positions of the cables, when an object close to the bent positions of the cables has a low melting point, the object will be molten, so that the entire cables are wrapped, thus the heat dissipation effect is worse, the cables are finally burnt due to overheating, and even burning of the automobile is caused. A multiconductor busbar cable is known in the prior art, e.g. from DE9011268U1. An insulating coated wire and method for manufacturing the same are known in the prior art, e.g. from US2015/310961A1. An insulator for covering electric conductors is known in the prior art, e.g. from US4192352A. A flexible busbar is known in the prior art, e.g. from EP2571119A2.

Therefore, there is an urgent need in the prior art for a new solution to solve the above problems.

### SUMMARY

The present invention is defined by the independent claims. Further embodiments are set forth in the dependent claims. Any references to inventions or embodiments not falling within the scope of the independent claims are to be interpreted as examples useful for understanding the invention. In order to solve the above problems, the present disclosure provides a new technical solution.

According to a first aspect of the present disclosure, an electric energy transmission system is provided. The electric energy transmission system includes at least one rigid electrical conductor and connectors provided at two ends of the rigid electrical conductor, and an insulating layer is provided on an outer side of the rigid electrical conductor. The rigid electrical conductor is provided with at least one bent portion, at least a part of the bent portion includes at least one cavity, and the cavity is located between an inner wall of the insulating layer and a periphery of the rigid electrical conductor.

A pressure value in the cavity is greater than that of an environment where the rigid electrical conductor is located.

The cavity contains a barrier breakdown dielectric, and the dielectric breakdown strength of the barrier breakdown dielectric is greater than that of air.

The barrier breakdown dielectric contains one or more selected from a silicide, a halide, a nitride and a carbide.

The connector includes a connection terminal, and the two ends of the rigid electrical conductor are electrically connected to the connection terminals.

The connection terminal is made of copper or copper alloys.

The rigid electrical conductor is made of aluminum or an aluminum alloy, and the rigid electrical conductor is electrically connected to the connection terminal in a welding or crimping manner.

The rigid electrical conductor is a rigid body, and the tensile strength of the rigid electrical conductor is higher than 75 MPa.

A cross section of the rigid electrical conductor is in one or more selected from: a circular shape, an oval shape, a rectangular shape, a polygonal shape, an A shape, a B shape, a D shape, an M shape, an N shape, an O shape, an S shape, an E shape, an F shape, an H shape, a K shape, an L shape, a P shape, a T shape, a U shape, a V shape, a W shape, an X shape, a Y shape, a Z shape, a semi-arc shape, an arc shape and a wavy shape.

When the cross section of the rigid electrical conductor has an edge, the edge is chamfered or rounded.

The bending radius of the bent portion is greater than or equal to 1.19 times a maximum outer diameter of the rigid electrical conductor.

There are at least two bent portions, and a distance between the two adjacent bent portions is greater than or equal to 2.6 times a maximum outer diameter of the rigid electrical conductor.

A maximum radial height of the cavity is less than or equal to three times the thickness of the insulating layer.

A radial height of the cavity decreases gradually from the middle of the cavity to the periphery of the cavity.

A maximum size of the cavity occupying a surface of the rigid electrical conductor is less than or equal to a maximum outer diameter of the rigid electrical conductor.

The sum of the areas of the cavities on a surface of the bent portion accounts for 20% to 80% of the surface area of the bent portion.

A radial shape of the cavity is a circular shape, or an oval shape, or a polygonal shape, or a sector shape, or a prismatic shape or a fusiform shape.

The present disclosure further provides an automobile, including the electric energy transmission system.

The present disclosure has the technical effects as follows:
1. the cavity is provided between the bent portion of the rigid electrical conductor and the inner wall of the insulating layer, the cavity contains air, and the thermal conductivity of the closed air is poor, so that when the bent portion of the rigid electrical conductor generates a large amount of heat, it does not affect the insulating layer outside the cavity, thereby protecting the insulating layer of the bent portion against softening or melting;
2. the closed air inside the cavity has an effect of heat isolation, so that heat of the bent portion of the rigid electrical conductor cannot be transmitted outside the insulating layer, and a low-melting-point object, such as a rubber-coated fabric and a sponge, that covers the insulating layer cannot be heated to be molten, thereby reducing the probability of accidents; and
3. the closed air inside the cavity expands during heating of the bent portion of the rigid electrical conductor, due to the existence of the insulating layer, the pressure in the cavity gradually increases, according to the Paschen's rule, the breakdown voltage increases as the air pressure increases, thus the voltage breakdown resistance of the bent portion is improved, and the safety of the electric energy transmission system is improved.

Other features and advantages of the present disclosure will become clear through detailed description of exemplary embodiments of the present disclosure below with reference to the drawings.

### BRIEF DESCRIPTION OF THE DRAWINGS

Drawings incorporated in the specification and constituting a portion of the specification show embodiments of the present disclosure, and are used for illustrating principles of the present disclosure together with the explanations thereof.
FIG. 1 is a structural schematic diagram of a connector assembly according to the present disclosure;
FIG. 2 to FIG. 4 are structural schematic diagrams of a bent portion of an rigid electrical conductor according to the present disclosure;
FIG. 5, FIG. 8 and FIG. 9 are section views of rigid electrical conductors with different cross-sectional areas according to the present disclosure;
FIG. 6 to FIG. 7 are structural schematic diagrams of a cavity according to the present disclosure; and
FIG. 10 is a structural schematic diagram of a bent portion according to the present disclosure.

In the drawings, the reference numerals are as follows:
1. rigid electrical conductor; 2. insulating layer; 3. connector; 4. bent portion; 5. connection terminal; and 6. cavity.

### DESCRIPTION OF THE EMBODIMENTS

Various exemplary embodiments of the present disclosure is described now in detail with reference to the drawings. It should be noted that, unless otherwise specified, the relative arrangements, numeric expressions and values of components and steps set out in these embodiments do not limit the scope of the present disclosure.

Actually, the following description of at least one exemplary embodiment is only for the illustrative purpose, and shall not be construed as any limitation on the present disclosure or the application and use thereof.

For those of ordinary skill in the art, the known techniques, methods and devices may not be discussed in detail. However, under appropriate conditions, the techniques, methods and apparatuses should be regarded as a part of the specification.

In all examples shown and discussed here, any specific value should be explained as exemplary only, and does not serve as a limitation. Therefore, other examples of the exemplary embodiments may have different values.

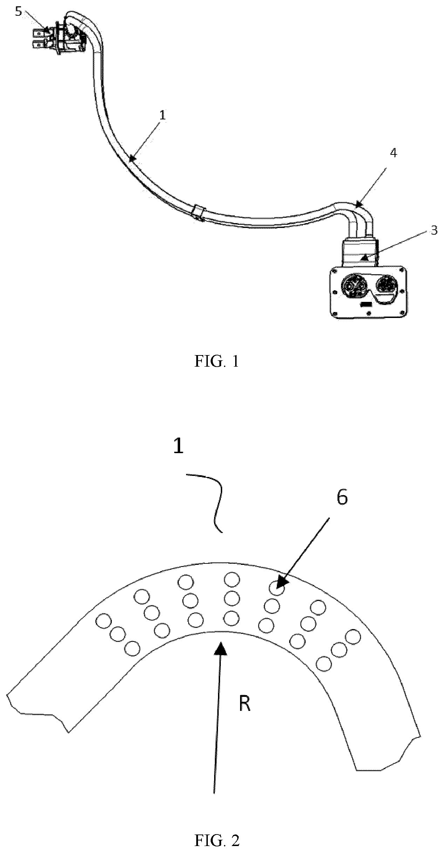

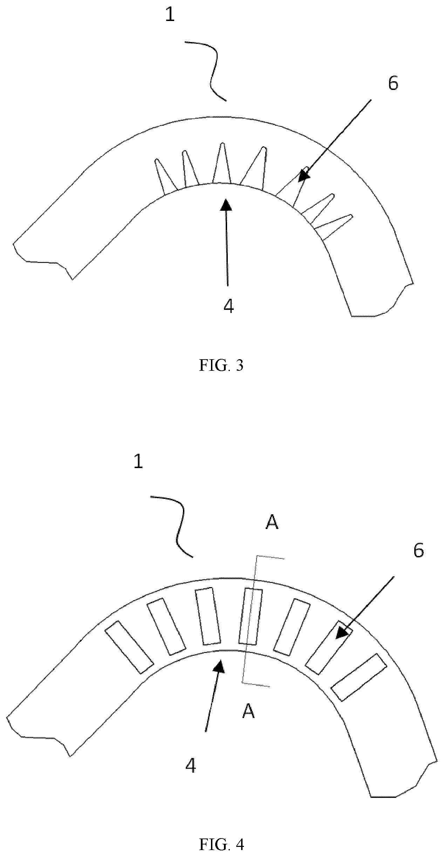

An electric energy transmission system, as shown in FIG. 1 to FIG. 10, includes at least one rigid electrical conductor 1, an insulating layer 2 sleeved on an outer wall of the rigid electrical conductor 1, and connectors 3 provided at two ends of the rigid electrical conductor 1, and the rigid electrical conductor 1 is provided with at least one bent portion 4. In at least a part of the bent portion 4, at least one cavity 6 is provided between an inner wall of the insulating layer 2 and a periphery of the rigid electrical conductor 1.

In a design process of the electric energy transmission system, the sectional area of the rigid electrical conductor 1 is carefully calculated according to an on-state current, and a sufficient margin is reserved. Even if thecurrent conducted by the rigid electrical conductor 1 exceeds a rated current due to voltage instability or the like, the rigid electrical conductor 1 can only be heated, and the rigid electrical conductor 1 cannot be fused or burnt. However, the insulating layer 2 covering the outside of the rigid electrical conductor 1 is made of a plastic material and has a melting temperature in a range of 115°C to 120°C; in addition, during mounting of the rigid electrical conductor 1, the insulating layer 2 also needs to be covered with a low-melting-point object which has a melting temperature below 100°C, such as a rubber-coated fabric and a sponge. Therefore, when the current is too large and the temperature rise exceeds the standard, the insulating layer 2 or the material such as the rubber-coated fabric and the sponge on the periphery of the rigid electrical conductor 1 is the object that needs to be protected against fusion or burning.

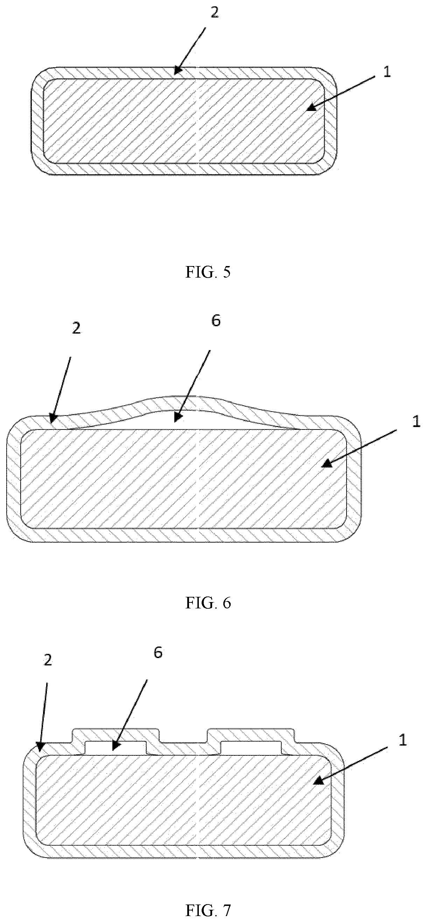

As shown in FIG. 6 to FIG. 7, the cavity 6 is provided between the bent portion 4 of the rigid electrical conductor 1 and the inner wall of the insulating layer 2, the cavity 6 contains a barrier breakdown dielectric, and the thermal conductivity of the closed barrier breakdown dielectric is poor, so that when the bent portion 4 of the rigid electrical conductor 1 generates a large amount of heat, it does not affect the insulating layer 2 outside the cavity 6, thereby protecting the insulating layer 2 of the bent portion 4 against softening or melting.

The closed barrier breakdown dielectric inside the cavity 6 has an effect of heat isolation, so that heat of the bent portion 4 of the rigid electrical conductor 1 cannot be transmitted outside the insulating layer 2, and the low-melting-point object, such as the rubber-coated fabric and the sponge, that covers the insulating layer 2 cannot be heated to be molten, thereby reducing the probability of accidents.

The closed barrier breakdown dielectric inside the cavity 6 expands during heating of the bent portion 4 of the rigid electrical conductor 1, due to the existence of the insulating layer 2, the pressure in the cavity 6 gradually increases, according to the Paschen's rule, the breakdown voltage increases as the barrier breakdown dielectric pressure increases, thus the voltage breakdown resistance of the bent portion 4 is improved, and the safety of the electric energy transmission system is improved.

In some embodiments, a pressure value in the cavity 6 is greater than that of an environment where the rigid electrical conductor 1 is located. Only when the pressure value in the cavity 6 is greater than the external atmospheric pressure value, the cavity 6 can be supported from the inside, thereby preventing collapsing of the cavity 6. Meanwhile, according to the Paschen's rule, the breakdown voltage increases as the barrier breakdown dielectric pressure increases, thus the voltage breakdown resistance of the bent portion 4 is improved, and the safety of the electric energy transmission system is improved.

The cavity 6 contains a barrier breakdown dielectric, and the dielectric breakdown strength of the barrier breakdown dielectric is greater than that of air. The barrier breakdown dielectric has the higher breakdown resistance, when the voltage of the rigid electrical conductor 1 is high, and after the conductor gets close to an external conducting device, an electric field is produced easily, and if the breakdown resistance of the insulating layer 2 is poor, the electric field can break through the insulating layer, causing instantaneous short-circuit, and causing damage of an automobile in serious cases. Therefore, adding the barrier breakdown dielectric in the cavity 6 can improve the breakdown resistance of the insulating layer 2 portion, and can improve the safety of the electric energy transmission system.

In some embodiments, the barrier breakdown dielectric contains one or more selected from a silicide, a halide, a nitride and a carbide. These compounds have good thermal conductivity, which can sufficiently assist in heat dissipation. These compounds have the small thermal expansion coefficient, which prevent the cavity 6 from being burst from the inside. And meanwhile, These compounds have good electric insulation property, small dielectric coefficient, and high breakdown resistance voltage, which can more effectively prevent breakdown.

In order to verify the influences of the cavities 6 not containing the barrier breakdown dielectric and containing the different barrier breakdown dielectric on the breakdown resistance effects of the bent portions 4, the inventor uses the rigid electrical conductors 1 in the same sizes, the bent portions 4 in the same sizes and the cavities 6 in the same sizes, the pressure values in the cavities 6 are the same, and the cavities 6 are respectively configured to not contain the barrier breakdown dielectric and contain the different barrier breakdown dielectric, breakdown resistance voltage tests are carried out respectively, and voltage values at the time of breakdown are observed and are recorded in Table 1. In this embodiment, the breakdown resistance voltage value greater than 2.1 KV is a qualified value.

A method for testing the breakdown resistance voltage of the bent portion 4 is as follows: conducting a stable current to the electric energy transmission system, respectively arranging electrodes on the rigid electrical conductor 1 of the bent portion 4 and the insulating layer 2 of the bent portion 4, conducting a direct-current high voltage to the two electrodes, and when the two electrodes are subjected to breakdown, recording the voltage value at that time. In this embodiment, the breakdown resistance voltage value greater than 2.1 KV is a qualified value.

**Table 1 Influences of cavities not containing barrier breakdown dielectric and containing different barrier breakdown dielectric on temperature rises of bent portions 4 and breakdown voltages of bent portions 4**

| Barrier breakdown dielectric contained in cavity | | | | |
|---|---|---|---|---|
| None | Silicide | Halide | Nitride | Carbide |
| Breakdown resistance voltage of bent portion 4 (KV) | | | | |
| 2.17 | 3.05 | 3.63 | 3.26 | 3.18 |

It can be seen from Table 1 that when the cavity 6 does not contain the barrier breakdown dielectric, the breakdown resistance voltage value of the bent portion 4 is greater than 2.1 KV, which is close to the qualified critical value, that is, not exceeding the qualified value too much, and then there is still a risk in the breakdown resistance of the bent portion 4. When the barrier breakdown dielectric in the cavities 6 contain the silicide, the halide, the nitride and the carbide, the breakdown resistance voltage values of the bent portions 4 greatly exceed the qualified value, and the breakdown resistance of the bent portions 4 is remarkably better than that when the cavity 6 does not contain the barrier breakdown qualified. Thus, the inventor sets that the barrier breakdown dielectric contains one or more selected from the silicide, the halide, the nitride and the carbide.

As shown in FIG. 1, the connector 3 include a connection terminal 5, and the two ends of the rigid electrical conductor 1 are electrically connected to the connection terminals 5. The connection terminal 5 is configured to plug in with the terminal of in the mating end, thereby achieving conduction of the current to achieve electric energy transmission.

In a specific implementation manner, the connection terminal 5 is made of copper or copper alloys.

The copper or copper alloys have high electric conductivity and are resistant to friction. In addition, electric connection portions of most existing electric devices are made of copper. Thus, the connection terminal 5 made of the copper or copper alloys needs to be used for plugging and unplugging connection, and the connection terminal 5 can be widely applied in various electric transmission scenes.

In a specific implementation manner, the rigid electrical conductor 1 is made of aluminum or an aluminum alloy, and the rigid electrical conductor 1 is electrically connected to the connection terminal 5 in a welding or crimping manner.

The rigid electrical conductor 1 can be specifically made of aluminum, a copper aluminum alloy, an aluminum magnesium alloy, an aluminum lithium alloy, or an aluminum zinc alloy.

The electric connection terminals 5 are made of the copper or copper alloys, the metal inertness of copper is greater than that of aluminum, the electrode potential difference between copper and aluminum is 1.9997 V, and an electrochemical reaction occurs after the two metals are connected and electrified, resulting in gradual oxidation of an aluminum wire, and reducing the mechanical strength and electric conductivity of the aluminum wire. Dissimilar materials can be connected in a welding manner, and the contact positions are fused, so that the electric conduction effect is better.

The specific welding manner includes one or more of a resistance welding manner, a friction welding manner, an ultrasonic welding manner, an arc welding manner, a laser welding manner, an electron beam welding manner, a pressure diffusion welding manner, and a magnetic induction welding manner.

The resistance welding manner refers to a method of using a large current to pass through a contact point between an electrode and a workpiece and allowing a contact resistor to produce heat to achieve welding.

The friction welding manner refers to a method of using heat produced by rubbing of a contact face of the workpiece as a heat source and enabling the workpiece to be subjected to plastic deformation under the action of pressure so as to perform welding.

The ultrasonic welding manner means that high-frequency vibration waves are transmitted to surfaces of two objects to be welded and the surfaces of the two objects rub against each other, under the condition of pressurization, to achieve fusion between two molecular layers.

The arc welding manner means that an electric arc serves as a heat source, by means of the physical phenomenon of air discharge, electric energy is converted into heat and mechanical energy required by welding, so as to achieve the purpose of connecting metals, and main methods include a shielded metal arc welding, a submerged arc welding and a gas shielded welding.

The laser welding manner is an efficient precision welding method using a laser beam with a high energy density as a heat source.

The electron beam welding manner means an accelerated and focused electron beam bombards a welding face placed in the vacuum or non-vacuum so that a welded workpiece is melted for welding.

The pressure welding manner is a method for applying pressure to a welded workpiece so that connection faces are close contact to generate certain plastic deformation to complete welding.

The diffusion welding manner refers to a solid-state welding method in which a workpiece is subjected to the pressurization at a high temperature without generating visible deformation and relative movement.

The magnetic induction welding manner means two welded workpieces produce an instantaneous high-speed collision under the action of a strong pulsed magnetic field, surface layers of materials are subjected to high pressure waves, and thus atoms of the two materials meet within the atomic spacing, thereby forming stable metallurgical bonding on an interface. It is one kind of solid-state cold welding, by which conducting metals with similar properties or dissimilar properties can be welded together.

For the specific welding manner, the appropriate connection manner or connection manner combination is selected according to actual states of the rigid electrical conductor 1 and the connection terminals 5, thereby achieving effective electric connection.

With regard to the crimping manner, crimping manner is a production technology for stamping the rigid electrical conductor 1 and the connection terminals 5 into a whole by means of a crimping machine after being assembed. The crimping has an advantage of mass production, and a large number of products with stable quality can be quickly manufactured by means of an automatic crimping machine.

In a specific implementation manner, the rigid electrical conductor 1 is a rigid body, and the tensile strength of the rigid electrical conductor 1 is higher than 75 MPa.

The rigid electrical conductor 1 is configured as a rigid conductor and cannot rub against an automobile shell during vibration of the entire automobile, so that the integrity of the rigid electrical conductor 1 can be ensured.

The rigid body refers to an object with the shape and size unchanged and relative positions of various points inside unchanged during motion and after being stressed. An absolute rigid body does not actually exist and is only an ideal model, because any object will be deformed to a certain extent after being stressed. If the deformation degree is very low relative to geometric dimensions of the object, the deformation can be omitted when the motion of the object is researched. Therefore, during use of the rigid electrical conductor 1 made of the rigid body material, the produced deformation amount is very little and can be omitted, and as the tensile strength of the rigid body increases, the deformation amount is reduced.

In order to verify the influences of the tensile strength of the rigid electrical conductor 1 on the tensile value when the rigid electrical conductor 1 is pulled apart, the torque when it is bent, and whether has the abnormal sounds in a vibration process, the inventor selects rigid electrical conductor 1 samples with the same dimensions and different tensile strength to test the tensile values when the rigid electrical conductors 1 is pulled apart, the torque when it is bent, and whether has the abnormal sounds in the vibration process.

A method for testing the tensile value of the rigid electrical conductor 1 is as follows: using a universal tensile test machine, respectively fixing the two ends of the rigid electrical conductor 1 to tensile jigs of the universal tensile test machine, performing stretching at a speed of 50 mm/min, and recording the tensile value when finally being pulled apart. In this embodiment, the tensile value greater than 1600 N is a qualified value.

A method for testing the torque of the rigid electrical conductor 1 is as follows: using a torque tester, and when the rigid electrical conductor 1 is bent by 90° at the same radius and the same speed, testing the torque value of deformation of the rigid electrical conductor 1 in the bending process. In this embodiment, the torque value less than 60 N·m is an exemplary value.

Whether the rigid electrical conductor 1 has the abnormal sounds is tested with such a method that the rigid electrical conductor 1 samples with the same dimensions and different tensile strength and the connectors 2 with the same dimensions are selected, assembled together and fixed on a vibration test platform, and in a vibration test process, whether the rigid electrical conductors 1 have the abnormal sounds is observed.

**Table 2: Influences of different tensile strength on torque values and abnormal sounds of rigid electrical conductors 1**

| Different tensile strength (MPa) | | | | | | | | | | | |
|---|---|---|---|---|---|---|---|---|---|---|---|
| 60 | 70 | 75 | 85 | 120 | 200 | 280 | 330 | 380 | 430 | 480 | 500 |

| Tensile value of rigid electrical conductor 1 when being pulled apart (N) | | | | | | | | | | | |
|---|---|---|---|---|---|---|---|---|---|---|---|
| 1422 | 1611 | 1688 | 1709 | 1759 | 1815 | 1856 | 1909 | 1950 | 1989 | 2040 | 2067 |

| Torque value when being bent in horizontal direction (N·m) | | | | | | | | | | | |
|---|---|---|---|---|---|---|---|---|---|---|---|
| 6 | 8 | 9 | 18 | 27 | 34 | 44 | 46 | 49 | 52 | 59 | 70 |

| Whether the rigid electrical conductor 1 has abnormal sounds | | | | | | | | | | | |
|---|---|---|---|---|---|---|---|---|---|---|---|
| Yes | Yes | No | No | No | No | No | No | No | No | No | No |

It can be seen from Table 2 that when the tensile strength of the rigid electrical conductor 1 is less than 75 Mpa, the tensile value of the rigid electrical conductor 1 when being pulled apart is less than 1600 N, then the strength of the rigid electrical conductor 1 is not high, the conductor is pulled apart easily under a small external force, resulting in failure of functions of the rigid electrical conductor 1, and thus the purpose of electric energy transmission cannot be achieved.

On the other hand, the greater the value of the tensile strength value of the rigid electrical conductor 1, the less likely that the rigid electrical conductor 1 deforms, and thus, in the vibration test process, the less likely that the rigid electrical conductor 1 has the abnormal sounds caused by vibration relative to the connectors 3 connected to the two ends; and on the contrary, the smaller the value of the tensile strength value of the rigid electrical conductor 1, the more likely that the rigid electrical conductor 1 deforms, and thus, in the vibration test process, the more likely that the rigid electrical conductor 1 has the abnormal sounds caused by vibration relative to the connectors 3 connected to the two ends. It can be seen from Table 1 that when the tensile strength of the rigid electrical conductor 1 is less than or equal to 75 Mpa, the rigid electrical conductor 1 can produce abnormal sounds in the vibration test process. Therefore, for the inventor, the tensile strength of the rigid electrical conductor 1 is exemplarily higher than 75 MPa.

Meanwhile, it can also be seen from Table 1 that when the tensile strength of the rigid electrical conductor 1 is higher than 480 Mpa, the torque value of the rigid electrical conductor 1 when being bent by 90° is greater than 60 N·m, and then the rigid electrical conductor 1 is not bent easily. Therefore, for the inventor, the tensile strength of the rigid electrical conductor 1 is further exemplarily higher than 75 MPa and lower than or equal to 480 MPa.

In a specific implementation manner, a cross section of the rigid electrical conductor 1 is in one or more selected from: a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a P shape, a U shape, a V shape, a W shape, an X shape, a Y shape, a Z shape, a semi-arc shape, an arc shape and a wavy shape. Further, as shown in FIG. 5, FIG. 8 and FIG. 9, the cross section of the rigid electrical conductor 1 is specifically in the circular shape, the rectangular shape or the hexagonal shape, which can achieve better wiring according to the contour of a body of an electric automobile, and reduce the material consumption for wiring.

When the cross section of the rigid electrical conductor 1 has an edge, the edge is chamfered or rounded.

The periphery of the rigid electrical conductor 1 is covered with the insulating layer 2, to prevent the insulating layer 2 from being damaged by friction with the edge, so that the edge is configured to be chamfered or rounded.

The bending radius of the bent portion 4 is greater than or equal to 1.19 times a maximum outer diameter of the rigid electrical conductor 1.

Compared with a multi-core aluminum wire, the rigid electrical conductor 1 has the good rigidity and is not prone to breakage in a bending process. In the present disclosure, the rigid electrical conductor 1 is used for connecting a first connector to a second connector, so that a current input from the first connector through the second connector to enter a vehicle-mounted battery. The rigid electrical conductor 1 is arranged along the automobile shell, and if it is too close to the automobile shell, during movement of the automobile, the rigid electrical conductor 1 will interfere with the automobile shell to produce the abnormal sounds; and it is tested by the inventor that when the minimum distance between the rigid electrical conductor 1 and the automobile shell is greater than or equal to 5 mm, it is able to effectively prevent the appearance of the abnormal sounds. The rigid electrical conductor 1, as a conductor, has a great advantage that it is bent easily. However, if the bending radius is too small, the rigid electrical conductor 1 inside bending is greatly compressed, and the rigid electrical conductor 1 outside bending is greatly stretched, so that many folds and breakage appear inside the rigid electrical conductor 1, the resistance of the rigid electrical conductor 1 is increased, and the electric conductivity of the rigid electrical conductor 1 is affected. Therefore, it is tested by the inventor that when the bending radius of the rigid electrical conductor 1 is greater than or equal to 1.19 times the maximum outer diameter of the rigid electrical conductor 1, the folds and breakage will not appear inside the rigid electrical conductor 1.

In order to verify the influence of the bending radius of the bent portion 4 on the temperature rise of the rigid electrical conductor 1, the inventor selects the rigid electrical conductors 1 with the same sectional shapes and the same sizes to produce samples with different bending radius, and then the same current is conducted to test the temperature rises of the bent portions 4 respectively.

A method for testing the temperature rises of the bent portions 4 is as follows: sealing the bent portions 4 in closed spaces with the same sizes, arranging a plurality of temperature sensors in the closed spaces, when the electric energy transmission system has no electricity, measuring the temperature values in the closed spaces and performing averaging, then introducing a stable current to the electric energy transmission system, after the temperatures in the closed spaces are stabilized, measuring the temperature values in the closed spaces and performing averaging, and the temperature rise value of the bending portion 4 is obtained by subtracting the two temperature average values. In this embodiment, the temperature rise value less than 50 K is a qualified value.

**Table 3 Influence of ratio of bending radius of bent portion 4 to maximum outer diameter of rigid electrical conductor 1 on temperature rise of bent portion 4**

| Ratio of bending radius of bent portion 4 to maximum outer diameter of rigid electrical conductor 1 (times) | | | | | | | |
|---|---|---|---|---|---|---|---|
| 1.10 | 1.13 | 1.16 | 1.19 | 1.20 | 1.22 | 1.25 | 1.30 |

| Temperature rise of bent portion 4 (K) | | | | | | | |
|---|---|---|---|---|---|---|---|
| 59.2 | 56.6 | 51.7 | 49.6 | 46.2 | 42.9 | 39.5 | 37.3 |

It can be seen from Table 3 that when the ratio of the bending radius of the bent portion 4 to the maximum outer diameter of the rigid electrical conductor 1 is less than 1.19 times, the temperature rise value of the bent portion 4 is greater than 50 K and is unacceptable. When the ratio of the bending radius of the bent portion 4 to the maximum outer diameter of the rigid electrical conductor 1 is greater than 1.19 times, the temperature rise value of the bent portion 4 is gradually reduced, and the trend is obvious. Therefore, the inventor sets that the bending radius of the bent portion 4 is greater than or equal to 1.19 times the maximum outer diameter of the rigid electrical conductor 1.

In a specific implementation manner, there are at least two bent portions 4, and a distance between the two adjacent bent portions 4 is greater than or equal to 2.6 times the maximum outer diameter of the rigid electrical conductor 1.

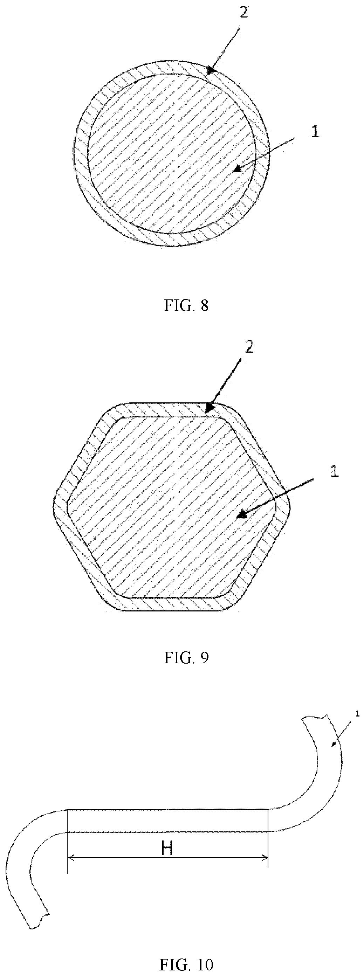

As shown in FIG. 10, the distance between the two adjacent bent portions 4 refers to the length of the rigid electrical conductor 1 at a straight section between the two bent portions 4, during actual operation, according to the design requirement, the straight rigid electrical conductor 1 with the corresponding size is bent to the certain radius and angle to adapt to a mounting environment, and thus the rigid electrical conductor 1 can be more appropriately mounted inside the body. In the process of bending the rigid electrical conductor 1, a portion of the rigid electrical conductor 1 needs to be fixed, then the straight rigid electrical conductor 1 can be bent, the length of the portion of the fixed rigid electrical conductor 1 cannot be too small and must be greater than 2.6 times the maximum outer diameter of the rigid electrical conductor 1, then the rigid electrical conductor 1 can be effectively fixed, the rigid electrical conductor 1 cannot be moved or deformed during bending of the rigid electrical conductor 1, and it is ensured that the bent portions 4 can be formed.

In order to verify the influence of the multiple of the distance between the two adjacent bent portions 4 and the maximum outer diameter of the rigid electrical conductor 1 on the success rate of bending of the straight rigid electrical conductor 1, the inventor selects the rigid electrical conductors 1 with the same sizes for bending at different adjacent distances respectively, bending is performed 50 times respectively, the number of samples with good bending is recorded, and the success rate of bending is calculated. In this embodiment, the success rate of bending higher than 95% is qualified.

**Table 4 Influence of multiple of distance between two adjacent bent portions 4 and maximum outer diameter of rigid electrical conductor 1 on success rate of bending of straight rigid electrical conductor 1**

| Multiple of distance between two adjacent bent portions 4 and maximum outer diameter of rigid electrical conductor 1 (times) | | | | | | | |
|---|---|---|---|---|---|---|---|
| 1.5 | 1.8 | 2.0 | 2.2 | 2.4 | 2. 6 | 2.8 | 3 |

| Success rate of bending of straight rigid electrical conductor 1 (%) | | | | | | | |
|---|---|---|---|---|---|---|---|
| 89.5 | 90.6 | 91.8 | 93.1 | 94.2 | 95.3 | 98.2 | 99.7 |

It can be seen from Table 4 that when the multiple of the distance between the two adjacent bent portions 4 and the maximum outer diameter of the rigid electrical conductor 1 is less than 2.6 times, the success rate of bending of the straight rigid electrical conductor 1 is less than 95% and is unacceptable. When the multiple of the distance between the two adjacent bent portions 4 and the maximum outer diameter of the rigid electrical conductor 1 is greater than 2.6 times, the success rate of bending of the straight rigid electrical conductor 1 is gradually increased, and the trend is obvious. Therefore, the inventor sets that the distance between the two adjacent bent portions 4 is greater than or equal to 2.6 times the maximum outer diameter of the rigid electrical conductor 1.

In a specific implementation manner, the maximum radial height of the cavity 6 is less than or equal to three times the thickness of the insulating layer 2.

If the radial height of the cavity 6 is too large, a narrow space may be encountered in a wiring process, the too large radial height of the cavity 6 may affect wiring, and meanwhile, a protrusion of the portion of the insulating layer 2 of the cavity 6 may also rub against the automobile shell or other components to cause breakage of the insulating layer 2. Therefore, the inventor defines the maximum radial height of the cavity 6 to be less than or equal to three times the thickness of the insulating layer 2.

In order to verify the influence of the ratio of the maximum radial height of the cavity 6 to the thickness of the insulating layer 2 on the abrasion of the insulating layer 2, the inventor selects samples which have the rigid electrical conductors 1 with the same sizes, the insulating layers 2 with the same thicknesses and different maximum radial heights of the cavities 6, the samples are respectively mounted on the vibration test platform, other electric appliance parts are mounted in a simulated manner near the rigid electrical conductors 1, then a vibration test is carried out, and the abrasion conditions of the insulating layers 2 after the vibration test are observed. In this embodiment, the insulating layer 2 being abraded is unacceptable.

**Table 5 Influence of ratio of maximum radial height of cavity 6 to thickness of insulating layer 2 on abrasion of insulating layer 2**

| Ratio of maximum radial height of cavity 6 to thickness of insulating layer 2 (times) | | | | | | | |
|---|---|---|---|---|---|---|---|
| 2.6 | 2.7 | 2.8 | 2.9 | 3.0 | 3.1 | 3.2 | 3.3 |

| Whether the insulating layer 2 is abraded | | | | | | | |
|---|---|---|---|---|---|---|---|
| No | No | No | No | No | Yes | Yes | Yes |

It can be seen from Table 5 that when the ratio of the maximum radial height of the cavity 6 to the thickness of the insulating layer 2 is less than or equal to three times, the insulating layer 2 of the rigid electrical conductor 1 is not abraded and is in a qualified state. When the ratio of the maximum radial height of the cavity 6 to the thickness of the insulating layer 2 is greater than three times, the insulating layer 2 of the rigid electrical conductor 1 begins to be abraded and is in an unacceptable state. Therefore, the inventor sets that the maximum radial height of the cavity 6 is less than or equal to three times the thickness of the insulating layer 2.

In a specific implementation manner, the radial height of the cavity 6 decreases gradually from the middle of the cavity to the periphery of the cavity 6.

As shown in FIG. 2 to FIG. 4, the radial height of the cavity 6 is gradually reduced from the middle to the periphery.

In a specific implementation manner, the maximum size of the cavity 6 occupying a surface of the rigid electrical conductor 1 is less than or equal to the maximum outer diameter of the rigid electrical conductor 1.

As shown in FIG. 2 to FIG. 4, the cavity 6 is distributed on the surface of the rigid electrical conductor 1 and is formed between the rigid electrical conductor 1 and the insulating layer 2, when the size of the cavity 6 on the surface of the rigid electrical conductor 1 is large, the insulating layer 2 may sink under the effect of an external force or its own gravity to get close to or make contact with the surface of the rigid electrical conductor 1, and thus the cavity 6 with a large size becomes several cavities 6 with small sizes. Therefore, when the size of the cavity 6 on the surface of the rigid electrical conductor 1 is large, it has no actual practicability, and then the volume of the cavity 6 is unable to be controlled, resulting in the heat of the rigid electrical conductor 1 unable to be controlled within the design range. After repeated experiments, the inventor found that when the size of the cavity 6 on the surface of the rigid electrical conductor 1 is less than or equal to the maximum outer diameter of the rigid electrical conductor 1, the cavity 6 cannot sink. Therefore, the inventor sets that the maximum size of the cavity 6 on the surface of the rigid electrical conductor 1 is less than or equal to the maximum outer diameter of the rigid electrical conductor 1.

In a specific implementation manner, the sum of the areas of the cavities 6 on a surface of the bent portion 4 accounts for 20% to 80% of the surface area of the bent portion 4.

As shown in FIG. 2 to FIG. 4, the sum of the areas of the cavities 6 on the surface of the bent portion 4 refers to the sum of areas of the plurality of cavities 6 on the surface of the bent portion 4. In order to verify the influence of the ratio of the sum of the areas of the cavities 6 on the surface of the bent portion 4 to the surface area of the bent portion 4 on the temperature rise and breakdown voltage of the bent portion 4 of the electric energy transmission system, the inventor carries out a series of experiments, selects the rigid electrical conductors 1 with the same sizes and the insulating layers 2 with the same sizes, and prepares the bent portions 4 with the same sizes, the cavities 6 with the same sizes are formed on the bent portions 4, the numbers are different, then the sums of the areas of the cavities 6 on the surfaces of the bent portions 4 are different, the temperature rises and breakdown voltages of the bent portions 4 are tested respectively, and results are recorded in Table 2.

A method for testing the temperature rises of the bent portions 4 is as follows: sealing the bent portions 4 in closed spaces with the same sizes, arranging a plurality of temperature sensors in the closed spaces, when the electric energy transmission system has no electricity, measuring the temperature values in the closed spaces and performing averaging, then introducing a stable current to the electric energy transmission system, after the temperatures in the closed spaces are stabilized, measuring the temperature values in the closed spaces and performing averaging, and the temperature rise value of the bending portion 4 is obtained by subtracting the two temperature average values. In this embodiment, the temperature rise value less than 50 K is a qualified value.

A method for testing the breakdown resistance voltage of the bent portion 4 is as follows: introducing a stable current into the electric energy transmission system, respectively arranging electrodes on the rigid electrical conductor 1 of the bent portion 4 and the insulating layer 2 of the bent portion 4, respectively, introducing a direct-current high voltage into the two electrodes, and when the two electrodes are subjected to breakdown, recording the voltage value at that time. In this embodiment, the breakdown resistance voltage value greater than 2.1 KV is a qualified value.

**Table 6 Influence of ratio of sum of areas of different cavities 6 on surface of bent portion 4 to surface area of bent portion 4 on temperature rise and breakdown voltage of bent portion 4**

| Ratio of sum of areas of cavities 6 on surface of bent portion 4 to surface area of bent portion 4 (%) | | | | | | | | | | |
|---|---|---|---|---|---|---|---|---|---|---|
| 5 | 10 | 20 | 30 | 40 | 50 | 60 | 70 | 80 | 90 | 95 |

| Temperature rise of bent portion 4 (K) | | | | | | | | | | |
|---|---|---|---|---|---|---|---|---|---|---|
| 62.4 | 56.6 | 49.5 | 46.3 | 42.8 | 39.4 | 37.2 | 35.7 | 32.2 | 31.8 | 31.6 |

| Breakdown resistance voltage of bent portion 4 (KV) | | | | | | | | | | |
|---|---|---|---|---|---|---|---|---|---|---|
| 1.89 | 2.01 | 2.16 | 2.34 | 2.56 | 2.79 | 3.02 | 3.24 | 3.52 | 3.54 | 3.55 |

It can be seen from Table 6 that when the ratio of the sum of the areas of the cavities 6 on the surface of the bent portion 4 to the surface area of the bent portion 4 is less than 20%, the temperature rise value of the bent portion 4 is greater than 50 K, the breakdown resistance voltage value is less than 2.1 KV, and the two values are unacceptable. When the ratio of the sum of the areas of the cavities 6 on the surface of the bent portion 4 to the surface area of the bent portion 4 is greater than 80%, the rise amplitudes of the temperature rise value and the breakdown voltage value of the bent portion 4 are small. However, the manufacturing difficulty of the cavities 6 is greatly increased. In addition, there are many cavities 6, the strength of the insulating layer 2 is reduced, and sinking or damage is caused easily by the external force. Therefore, the inventor sets that the sum of the areas of the cavities 6 on the surface of the bent portion 4 accounts for 20% to 80% of the surface area of the bent portion 4.

A radial shape of the cavity 6 is a circular shape, or an oval shape, or a polygonal shape, or a sector shape, or a prismatic shape or a fusiform shape. A user can select the different radial shapes according to different environments and usage requirements.

The connectors 3 are charging sockets. As shown in FIG. 1, one end of the rigid electrical conductor 1 is connected to the connection terminal 5 and then is connected to the charging socket, and the connection terminal 5 arranged on the other end of connector 3 can be connected to the vehicle-mounted battery, thereby forming a complete charging system.

An automobile includes the electric energy transmission system.

## Claims

1. An electric energy transmission system, comprising at least one rigid electrical conductor (1) and connectors (3) provided at two ends of the rigid electrical conductor (1), and an insulating layer (2) is provided on an outer side of the rigid electrical conductor (1), wherein the rigid electrical conductor (1) is provided with at least one bent portion (4), at least a part of the bent portion (4) comprises at least one cavity (6), and the cavity (6) is located between an inner wall of the insulating layer (2) and a periphery of the rigid electrical conductor (1),
**characterized in that** the cavity (6) contains a barrier breakdown dielectric, and the dielectric breakdown strength of the barrier breakdown dielectric is greater than that of air; and
the bending radius of the bent portion (4) is greater than or equal to 1.19 times a maximum outer diameter of the cable (1).

2. The electric energy transmission system according to claim 1, wherein a pressure value in the cavity (6) is greater than that of an environment where the rigid electrical conductor (1) is located, so that the cavity (6) is capable of being supported from the inside to prevent its collapse.

3. The electric energy transmission system according to claim 1, wherein the barrier breakdown dielectric contains one or more selected from a silicide, a halide, a nitride and a carbide.

4. The electric energy transmission system according to claim 1, wherein the connector (3) comprises a connection terminal (5), and the two ends of the rigid electrical conductor (1) are electrically connected to the connection terminals (5).

5. The electric energy transmission system according to claim 4, wherein the connection terminal (5) is made of copper or copper alloys.

6. The electric energy transmission system according to claim 5, wherein the rigid electrical conductor (1) is made of aluminum or an aluminum alloy, and the rigid electrical conductor (1) is electrically connected to the connection terminal (5) in a welding or crimping manner.

7. The electric energy transmission system according to claim 1, wherein the rigid electrical conductor (1) is a rigid body, and the tensile strength of the rigid electrical conductor (1) is higher than 75 MPa.

8. The electric energy transmission system according to claim 1, wherein a cross section of the rigid electrical conductor (1) is in one or more selected from: a circular shape, an oval shape, a rectangular shape, a polygonal shape, an A shape, a B shape, a D shape, an M shape, an N shape, an O shape, an S shape, an E shape, an F shape, an H shape, a K shape, an L shape, a T shape, a P shape, a U shape, a V shape, a W shape, an X shape, a Y shape, a Z shape, a semi-arc shape, an arc shape and a wavy shape.

9. The electric energy transmission system according to claim 8, wherein when the cross section of the rigid electrical conductor (1) has an edge, the edge is chamfered or rounded.

10. The electric energy transmission system according to claim 1, wherein there are at least two bent portions (4), and a distance between the two adjacent bent portions (4) is greater than or equal to 2.6 times a maximum outer diameter of the rigid electrical conductor (1).

11. The electric energy transmission system according to claim 1, wherein a maximum radial height of the cavity (6) is less than or equal to three times the thickness of the insulating layer (2);
or
wherein a radial height of the cavity (6) decreases gradually from the middle of the cavity (6) to the periphery of the cavity (6).

12. The electric energy transmission system according to claim 1, wherein a maximum size of the cavity (6) occupying a surface of the rigid electrical conductor (1) is less than or equal to a maximum outer diameter of the rigid electrical conductor (1);
or
wherein the sum of the areas of the cavities on a surface of the bent portion (4) accounts for 20% to 80% of the surface area of the bent portion (4).

13. The electric energy transmission system according to claim 1, wherein a radial shape of the cavity (6) is a circular shape, or an oval shape, or a polygonal shape, or a sector shape, or a prismatic shape or a fusiform shape.

14. An automobile, comprising the electric energy transmission system according to any one of claims 1 to 13.

## Patentansprüche

1. Elektrisches Energieübertragungssystem, umfassend mindestens einen starren elektrischen Leiter (1) und an zwei Enden des starren elektrischen Leiters (1) bereitgestellte Verbinder (3), und wobei an einer Außenseite des starren elektrischen Leiters (1) eine Isolierschicht (2) bereitgestellt ist, wobei der starre elektrische Leiter (1) mit mindestens einem gebogenen Abschnitt (4) bereitgestellt ist, mindestens ein Teil des gebogenen Abschnitts (4) mindestens einen Hohlraum (6) umfasst und sich der Hohlraum (6) zwischen einer Innenwand der Isolierschicht (2) und einem Umfang des starren elektrischen Leiters (1) befindet,
**dadurch gekennzeichnet, dass** der Hohlraum (6) ein Barrierendurchschlagdielektrikum enthält, und die dielektrische Durchschlagsfestigkeit des Barrierendurchschlagdielektrikums größer ist als die von Luft; und
der Biegeradius des gebogenen Abschnitts (4) größer oder gleich dem 1,19-fachen eines maximalen Außendurchmessers des Kabels (1) ist.

2. Elektrisches Energieübertragungssystem nach Anspruch 1, wobei ein Druckwert in dem Hohlraum (6) größer ist als der einer Umgebung, in der sich der starre elektrische Leiter (1) befindet, sodass der Hohlraum (6) von innen gestützt werden kann, um sein Kollabieren zu verhindern.

3. Elektrisches Energieübertragungssystem nach Anspruch 1, wobei das Barrierendurchschlagdielektrikum ein oder mehrere Materialien enthält, ausgewählt aus einem Silizid, einem Halogenid, einem Nitrid und einem Carbid.

4. Elektrisches Energieübertragungssystem nach Anspruch 1, wobei der Verbinder (3) eine Anschlussklemme (5) umfasst und die zwei Enden des starren elektrischen Leiters (1) elektrisch mit den Anschlussklemmen (5) verbunden sind.

5. Elektrisches Energieübertragungssystem nach Anspruch 4, wobei die Anschlussklemme (5) aus Kupfer oder Kupferlegierungen besteht.

6. Elektrisches Energieübertragungssystem nach Anspruc 5, wobei der starre elektrische Leiter (1) aus Aluminium oder einer Aluminiumlegierung besteht und der starre elektrische Leiter (1) durch Schweißen oder Crimpen elektrisch mit der Anschlussklemme (5) verbunden ist.

7. Elektrisches Energieübertragungssystem nach Anspruch 1, wobei der starre elektrische Leiter (1) ein starrer Körper ist und die Zugfestigkeit des starren elektrischen Leiters (1) mehr als 75 MPa beträgt.

8. Elektrisches Energieübertragungssystem nach Anspruch 1, wobei ein Querschnitt des starren elektrischen Leiters (1) eine oder mehrere Formen aufweist, ausgewählt aus einer kreisförmigen Form, einer ovalen Form, einer rechteckigen Form, einer polygonalen Form, einer A-Form, einer B-Form, einer D-Form, einer M-Form, einer N-Form, einer O-Form, einer S-Form, einer E-Form, einer F-Form, einer H-Form, einer K-Form, einer L-Form, einer T-Form, einer P-Form, einer U-Form, einer V-Form, einer W-Form, einer X-Form, einer Y-Form, einer Z-Form, einer Halbkreisform, einer Bogenform und einer wellenartigen Form.

9. Elektrisches Energieübertragungssystem nach Anspruch 8, wobei, wenn der Querschnitt des starren elektrischen Leiters (1) eine Kante aufweist, die Kante abgeschrägt oder abgerundet ist.

10. Elektrische Energieübertragungssystem nach Anspruch 1, wobei mindestens zwei gebogene Abschnitte (4) vorhanden sind und ein Abstand zwischen den zwei benachbarten gebogenen Abschnitten (4) größer oder gleich dem 2,6-fachen eines maximalen Außendurchmessers des starren elektrischen Leiters (1) ist.

11. Elektrisches Energieübertragungssystem nach Anspruch 1, wobei eine maximale radiale Höhe des Hohlraums (6) kleiner oder gleich dem Dreifachen der Dicke der Isolierschicht (2) ist;
oder
wobei eine radiale Höhe des Hohlraums (6) von der Mitte des Hohlraums (6) zum Rand des Hohlraums (6) hin allmählich abnimmt.

12. Elektrisches Energieübertragungssystem nach Anspruch 1, wobei eine maximale Größe des Hohlraums (6), der eine Oberfläche des starren elektrischen Leiters (1) einnimmt, kleiner oder gleich einem maximalen Außendurchmesser des starren elektrischen Leiters (1) ist;
oder
wobei die Summe der Flächen der Hohlräume auf einer Oberfläche des gebogenen Abschnitts (4) 20 % bis 80 % der Fläche der Oberfläche des gebogenen Abschnitts (4) ausmacht.

13. Elektrisches Energieübertragungssystem nach Anspruch 1, wobei eine radiale Form des Hohlraums (6) eine kreisförmige Form, eine ovale Form, eine polygonale Form, eine Sektorform, eine Prismenform oder eine Spindelform ist.

14. Automobil, umfassend das elektrische Energieübertragungssystem nach einem der Ansprüche 1 bis 13.

## Revendications

1. Système de transmission d'énergie électrique, comprenant au moins un conducteur électrique rigide (1) et des connecteurs (3) disposés aux deux extrémités du conducteur électrique rigide (1), et une couche isolante (2) est prévue sur une face extérieure du conducteur électrique rigide (1), dans lequel le conducteur électrique rigide (1) est muni d'au moins une portion coudée (4), dont au moins une partie de la portion coudée (4) comprend au moins une cavité (6), et la cavité (6) est située entre une paroi intérieure de la couche isolante (2) et une périphérie du conducteur électrique rigide (1),
**caractérisée en ce que** la cavité (6) contient un diélectrique à barrière de claquage, et que la rigidité diélectrique de ce diélectrique est supérieure à celle de l'air ; et
le rayon de courbure de la partie coudée (4) est supérieur ou égal à 1,19 fois le diamètre extérieur maximal du câble (1).

2. Système de transmission d'énergie électrique selon la revendication 1, dans lequel une valeur de pression dans la cavité (6) est supérieure à celle d'un environnement où se trouve le conducteur électrique rigide (1), de sorte que la cavité (6) puisse être soutenue de l'intérieur pour empêcher son effondrement.

3. Système de transmission d'énergie électrique selon la revendication 1, dans lequel le diélectrique de claquage de barrière contient un ou plusieurs éléments choisis parmi un siliciure, un halogénure, un nitrure et un carbure.

4. Système de transmission d'énergie électrique selon la revendication 1, dans lequel le connecteur (3) comprend une borne de connexion (5), et les deux extrémités du conducteur électrique rigide (1) sont électriquement connectées aux bornes de connexion (5).

5. Système de transmission d'énergie électrique selon la revendication 4, dans lequel la borne de connexion (5) est en cuivre ou en alliages de cuivre.

6. Système de transmission d'énergie électrique selon la revendication 5, dans lequel le conducteur électrique rigide (1) est en aluminium ou en alliage d'aluminium, et le conducteur électrique rigide (1) est connecté électriquement à la borne de connexion (5) par soudage ou sertissage.

7. Système de transmission d'énergie électrique selon la revendication 1, dans lequel le conducteur électrique rigide (1) est un corps rigide et la résistance à la traction du conducteur électrique rigide (1) est supérieure à 75 MPa.

8. Système de transmission d'énergie électrique selon la revendication 1, dans lequel une section transversale du conducteur électrique rigide (1) est choisie parmi : une forme circulaire, une forme ovale, une forme rectangulaire, une forme polygonale, une forme en A, une forme en B, une forme en D, une forme en M, une forme en N, une forme en O, une forme en S, une forme en E, une forme en F, une forme en H, une forme en K, une forme en L, une forme en T, une forme en P, une forme en U, une forme en V, une forme en W, une forme en X, une forme en Y, une forme en Z, une forme en demi-arc, une forme en arc et une forme ondulée.

9. Système de transmission d'énergie électrique selon la revendication 8, dans lequel lorsque la section transversale du conducteur électrique rigide (1) présente un bord, le bord est chanfreiné ou arrondi.

10. Système de transmission d'énergie électrique selon la revendication 1, dans lequel il existe au moins deux portions coudées (4), et une distance entre les deux portions coudées adjacentes (4) est supérieure ou égale à 2,6 fois le diamètre extérieur maximal du conducteur électrique rigide (1).

11. Système de transmission d'énergie électrique selon la revendication 1, dans lequel une hauteur radiale maximale de la cavité (6) est inférieure ou égale à trois fois l'épaisseur de la couche isolante (2) ;
ou
dans lequel la hauteur radiale de la cavité (6) diminue progressivement du milieu de la cavité (6) à la périphérie de la cavité (6).

12. Système de transmission d'énergie électrique selon la revendication 1, dans lequel la taille maximale de la cavité (6) occupant une surface du conducteur électrique rigide (1) est inférieure ou égale au diamètre extérieur maximal du conducteur électrique rigide (1) ;
ou
dans lequel la somme des surfaces des cavités sur une surface de la partie pliée (4) représente de 20 % à 80 % de la surface de la partie pliée (4).

13. Système de transmission d'énergie électrique selon la revendication 1, dans lequel la forme radiale de la cavité (6) est une forme circulaire, ou une forme ovale, ou une forme polygonale, ou une forme sectorielle, ou une forme prismatique ou une forme fusiforme.

14. Automobile comprenant le système de transmission d'énergie électrique selon l'une quelconque des revendications 1 à 13.
